# EUROPÄISCHE PATENTSCHRIFT

(11) **EP 3 411 272 B1**
(45) Veröffentlichungstag und Bekanntmachung des Hinweises auf die Patenterteilung: **06.07.2022**
(21) Anmeldenummer: 17701471.9
(22) Anmeldetag: 24.01.2017
(51) Int. Cl.: B60T 8/88, B60T 17/22

(54) **ÜBERWACHUNG INAKTIVER MAGNETVENTILE**
MONITORING OF INACTIVE SOLENOID VALVES
SURVEILLANCE D'ÉLECTROVANNES INACTIVES

(30) Priorität: 01.02.2016 DE 102016101700
(43) Veröffentlichungstag der Anmeldung: 12.12.2018
(73) Patentinhaber: KNORR-BREMSE Systeme für Nutzfahrzeuge GmbH, 80809 München (DE)
(72) Erfinder: SCHOLL, Frank, 74379 Ingersheim (DE); ZHAO, Ping, 71229 Leonberg (DE)
(86) Internationale Anmeldenummer: PCT/EP2017/051404
(87) Internationale Veröffentlichungsnummer: WO 2017/133923

(56) Entgegenhaltungen:
- EP-A1- 2 119 610
- EP-A2- 0 025 913
- WO-A1-2014/016223
- DE-A1- 10 124 109
- DE-A1- 19 529 433
- DE-A1- 19 826 685

## Beschreibung

Die Erfindung betrifft ein Verfahren zum Überwachen eines Magnetventils, umfassend eine Steuerspule zum Steuern eines Luftdruckes in einem Bremszylinder einer elektropneumatischen Bremse, eine Steuervorrichtung zur Durchführung des Verfahrens und eine elektropneumatische Bremse mit der Steuervorrichtung.

Ein derartiges Verfahren ist aus der WO 2001/066 397 A1 bekannt. Dort wird zum Überwachen eines Magnetventils ein Messsignal auf der Versorgungsspannungseite des Magnetventils abgegriffen. Die Versorgungsspannungsseite bestimmt sich dabei nach einer in dem Magnetventil vorhandenen Steuerspule zum Steuern eines Luftdruckes in einem Bremszylinder einer elektropneumatischen Bremse, wobei die Steuerspule an der Versorgungsspannungsseite einen elektrischen Versorgungsstrom aufnimmt und an einer Referenzpotentialseite den elektrischen Versorgungsstrom abgibt. Durch Abgreifen eines Messsignals auf der Versorgungsspannungsseite des Magentventils können Kurzschlüsse der Steuerspule erkannt werden.

Aus den Druckschriften DE 101 24 109 A1, EP 0 025 913 A2, WO 2014/016 223 A1 und DE 195 29 433 A1 ist ein Verfahren gemäß dem Oberbegriff des Anspruchs 1 bekannt.

Es ist Aufgabe der Erfindung, die Überwachung des Magnetventils zu verbessern.

Die Aufgabe wird durch die Merkmale des unabhängigen Anspruchs 1 gelöst. Bevorzugte Weiterbildungen sind Gegenstand der abhängigen Ansprüche.

Gemäß einem Aspekt der Erfindung umfasst ein Verfahren zum Überwachen eines Magnetventils mit einer Steuerspule zum Steuern eines Luftdruckes in einem Bremszylinder einer elektropneumatischen Bremse, wobei das Magnetventil eine Versorgungsspannungsseite, an der die Steuerspule einen elektrischen Versorgungsstrom aufnimmt, und eine Referenzpotentialseite, an der die Steuerspule den elektrischen Versorgungsstrom abgibt, aufweist, die Schritte Anlegen oder Einspeisen eines Testsignals auf einer Seite des Magnetventils, Abgreifen eines Messsignals auf der anderen Seite des Magnetventils und Bestimmen des Zustandes des Magnetventils basierend auf einer Gegenüberstellung des Testsignals und des Messsignals.

Dem angegebenen Verfahren liegt die Überlegung zugrunde, dass in dem eingangs genannten Verfahren an der Steuerspule lediglich überwacht wird, ob der Versorgungsstrom durch die Steuerspule auch dem Betriebsverhalten der Steuerspule entsprechend verläuft. Das heißt, wenn das Magnetventil eingeschaltet und damit die Steuerspule bestromt ist, dann muss das Testsignal einen der Versorgungsspannung entsprechenden Wert besitzen, und wenn die Steuerspule unbestromt ist, dann muss das Testsignal einen dem Referenzpotential - üblicherweise Masse - entsprechenden Wert besitzen. Nicht überwacht werden kann jedoch die Steuerspule in einem abgeschalteten Zustand, weil sich das Referenzpotential nicht ändert. Auch ist es mit dem eingangs genannten Verfahren nicht möglich, Unterbrechungen oder andere technisch falsche Impedanzwerte der Steuerspule zu bestimmen, weil diese nicht von einem bestimmungsgemäßen Betrieb der Steuerspule unterschieden werden können.

Hier greift das angegebene Verfahren mit dem Vorschlag an, ein Testsignal auf einer Seite des Magnetventils anzulegen und auf der anderen Seite des Magnetventils zu prüfen, ob das Testsignal korrekt empfangen wird. Nur wenn das Testsignal in einer vorbestimmten Weise von einer Seite des Magnetventils auf die andere Seite des Magnetventils übertragen wird, kann von einem fehlerfreien Zustand seiner Steuerspule und damit des Magnetventils ausgegangen werden. Damit lässt sich das Magnetventil nicht nur auf mehrere Fehlerzustände hin überwachen, die Überwachung klappt auch dann, wenn die Steuerspule des Magnetventils in einem unbestromten und damit inaktiven Betriebszustand ist.

Erfindungsgemäß ist das Testsignal von der Steuerung des Luftdrucks im Bremszylinder abhängig oder sogar ein Steuersignal, das zur Einstellung des Luftdruckes im Bremszylinder dient. Auf diese Weise lässt sich das Verfahren in einer bereits vorhandenen elektropneumatischen Bremse ohne weitere Anpassungen durch reine Beobachtungen und/oder Signalauswertungen umsetzen, in der Steuersignale vorhanden sind, die als Testsignale geeignet sind.

In einer Weiterbildung des angegebenen Verfahrens weist das Testsignal einen vorbestimmten, sich zeitlich ändernden Verlauf auf. Der zeitliche Verlauf ist ein weiteres Überwachungsmittel für die Steuerspule, denn dieser muss sich im Testsignal wiederfinden.

Dabei kann der zeitliche Verlauf aus einer Vielzahl von Pulsen gebildet sein. Eine derartige Pulsfolge lässt sich in einfacher Weise mit herkömmlichen Pulsgeneratoren erzeugen. In modernen elektropneumatischen Bremsen, die mittels Pulsweitenmodulation angesteuert werden, sind derartige Pulsfolgen ohnehin vorhanden.

In einer technisch besonders einfachen Ausführung des angegebenen Verfahrens werden Pulse im Messsignal über eine vorbestimmte Zeitdauer gezählt, wobei die Gegenüberstellung einen Vergleich der gezählten Pulse im Messsignal mit einem Zählwert umfasst, der einer Anzahl von Pulsen im Testsignal während der vorbestimmten Zeitdauer entspricht. Weil die Steuerspule zwar die Phase des Testsignals mit den Pulsen, nicht aber seine Frequenz ändert, muss sich die Anzahl der Pulse aus dem Testsignal 1:1 in dem Messsignal wiederfinden. Unabhängig von diesem Kriterium kann jedoch ein Ausbleiben der Pulsfolge im Messsignal oder ein ständig aktives Messsignal als Kurzschluss oder als Unterbrechung gewertet werden, je nachdem auf welcher Seite der Steuerspule das Messsignal abgegriffen wird.

In einer anderen Weiterbildung des angegebenen Verfahrens ist die Steuerspule parallel zu einem versorgungsseitigen Spannungsteiler geschaltet, wobei das Messsignal an einem Zwischenpotentialpunkt des versorgungsseitigen Spannungsteilers abgegriffen wird. Durch eine applikationsabhängige Wahl des Spannungsteilers können das Messsignal und das Testsignal basierend auf einer vergleichsweise hohen Betriebsspannung für das Magnetventil von beispielsweise 24V erzeugt und dennoch von einer empfindlichen Auswerteschaltung abgegriffen werden, an die vergleichsweise niedrige Eingangsspannungen von beispielsweise 3V angelegt werden müssen.

In einer zusätzlichen Weiterbildung des angegebenen Verfahrens ist die Steuerspule in Reihe zu einem referenzpotentialseitigen Spannungsteiler geschaltet, wobei das Testsignal an einen Zwischenpotentialpunkt des referenzpotentialseitigen Spannungsteilers angelegt wird. Wenn das Referenzpotential Masse ist, ist auf diese Weise sichergestellt, dass das Testsignal nicht unmittelbar an das Referenzpotential geleitet wird, ohne dass es eine Wirkung an der Versorgungsseite des Spannungsteilers auslöst und dort als Messsignal abgegriffen werden kann.

In einer besonderen Weiterbildung des angegebenen Verfahrens liegt ein Verhältnis zwischen dem Spannungsteiler und der Steuerspule zwischen 1:50 und 1:200, insbesondere zwischen 1:75 und 1:150, besonders bevorzugt bei 1:100. Innerhalb dieser Werte wird sichergestellt, dass insbesondere das pulsförmige Testsignal sich an einer inaktiven Testspule beobachten lässt, die das Testsignal aufgrund ihrer induktiven Eigenschaft grundsätzlich stark dämpft.

In einer besonders bevorzugten Weiterbildung des angegebenen Verfahrens ist ein weiteres Magnetventil mit einer weiteren Steuerspule vorhanden, wobei die beiden Magentventile in Reihe geschaltet sind und das Testsignal an einem Zwischenpotentialpunkt zwischen den beiden Magnetventilen eingespeist wird.

In dieser Anordnung kann das weitere Magnetventil besonders effizient mit überwacht werden. Hierzu wird ein weiteres Messsignal auf der dem Zwischenpotentialpunkt gegenüberliegenden Seite des weiteren Magnetventils abgegriffen und der Zustand des weiteren Magnetventils basierend auf einer Gegenüberstellung des Testsignals und des weiteren Messsignals bestimmt. Auf diese Weise können beide Magnetventile mit einer einzigen Signalquelle zur Erzeugung des Testsignals überwacht werden.

Die zuvor genannte Anordnung ist um beliebig viele weitere Magnetventile sternförmig erweiterbar.

Gemäß einem weiteren Aspekt der Erfindung ist eine Steuervorrichtung eingerichtet, ein Verfahren nach einem der vorstehenden Ansprüche durchzuführen.

In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer einer der angegebenen Vorrichtungen ausgeführt wird.

Gemäß einem anderen Aspekt der Erfindung umfasst eine elektropneumatische Bremse einen mit Luftdruck befüllbaren Bremszylinder zum Ansteuern eines Bremsaktuators, eine Luftdruckquelle zum Befüllen des Bremszylinders, ein Magnetventil zum gesteuerten Anlegen eines Luftdrucks aus der Luftdruckquelle an den Bremszylinder und eine der angegebenen Steuervorrichtungen zum Überwachen des Zustandes des Magnetventils.

Gemäß einem anderen Aspekt der Erfindung umfasst ein Fahrzeug, insbesondere ein Nutzfahrzeug, wie eine Sattelzugmaschine, eine der angegebenen Steuervorrichtungen und/oder die angegebene elektropneumatische Bremse.

Im Folgenden wird die Erfindung anhand von Ausführungsbeispielen im Zusammenhang mit der Zeichnung ausführlicher erläutert. Es zeigen:
- Fig. 1: eine schematische Ansicht eines Fahrzeuges mit einer Bremsanlage;

- Fig. 2: eine schematische Ansicht einer Schaltung zur Ansteuerung von Magnetventilen in der Bremsanlage des Fahrzeuges aus Fig. 1, und
- Fig. 3a bis 5: Strukturdiagramme von Überwachungsvorrichtungen zur Überwachung der Magnetventile in der Bremsanlage des Fahrzeuges aus Fig. 1 mit der Schaltung aus Fig. 2.

In den Figuren sind gleiche technische Elemente mit gleichen Bezugszeichen versehen und nur einmal beschrieben.

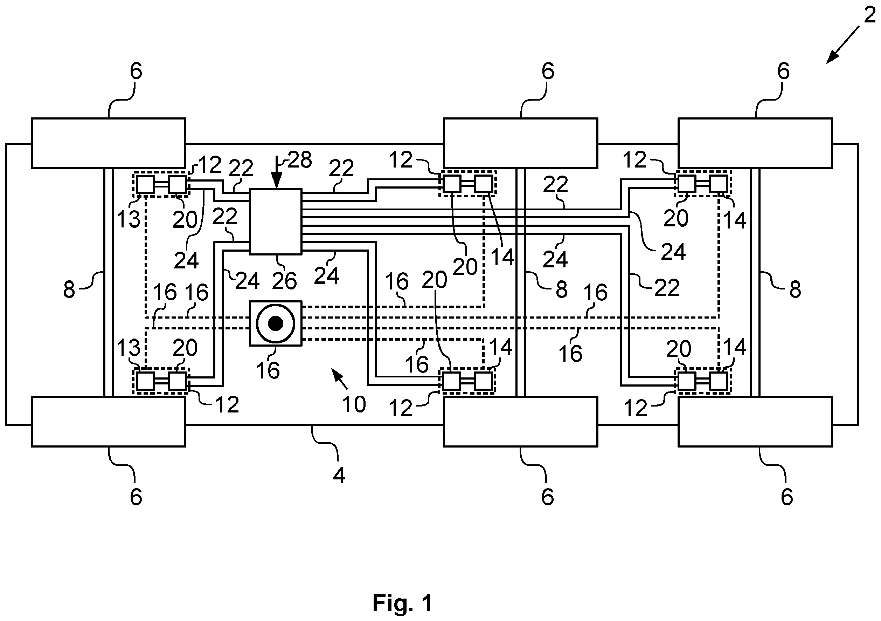

In Fig. 1 ist schematisch ein Fahrzeug in Form eines als Sattelzugmaschine 2 ausgeführten Nutzfahrzeuges gezeigt. Die Sattelzugmaschine 2 weist ein Chassis 4 auf, an dem drehbar Räder 6 über Achsen 8 getragen werden. Die Räder 6 werden zur Fortbewegung der Sattelzugmaschine 2 einzeln oder alle über ein nicht weiter dargestelltes Antriebssystem angetrieben. Derartige Antriebssysteme sind bestens bekannt und sollen nachstehend nicht weiter thematisiert werden.

Um die fahrende Sattelzugmaschine 2 während des Betriebs abzubremsen (Betriebsbremswirkung) oder um die Sattelzugmaschine 2 im Stillstand festzuhalten (Feststellwirkung), damit sie sich nicht unbeabsichtigt bewegt, ist an dieser ein Bremssystem 10 angeordnet. Das Bremssystem 10 umfasst an jedem Rad 6 eine Bremse 12, die gegenüber dem jeweiligen Rad 6 ortsfest am Chassis 4 angeordnet ist.

Jede Bremse 12 weist einen nicht weiter dargestellten Bremsaktuator auf, der in sein entsprechend zugeordnetes Rad 6 eingreift, dieses blockiert und so eine Drehung des Rades 6 gegenüber dem Chassis 4 verhindern kann. An der Vorderachse 8 werden die nicht gezeigten Bremsaktuatoren von Bremszylindern 13 bewegt, die in der Sattelzugmaschine 2 lediglich eine Betriebsbremswirkung entfalten. Demgegenüber werden die Bremsaktuatoren an den Hinterachsen 8 mit sog. Kombibremszylindern 14 bewegt, die in der Sattelzugmaschine 2 sowohl eine Betriebsbremswirkung als auch eine Feststellbremswirkung entfalten können. Derartige Bremszylinder sind bestens bekannt und sollen nachstehend nicht weiter beschrieben werden. Alle Bremszylinder 13, 14 werden pneumatisch über in Fig. 1 gestrichelt dargestellte Luftdruckleitungen 16 mit Druckluft befüllt, die aus einer Luftdruckquelle 18 entnommen wird. Die Funktionsweisen derartiger Bremsen ist bestens bekannt und soll nachstehend nicht weiter thematisiert werden.

Zur Steuerung des Luftdruckes in den Bremszylindern 13, 14 umfasst jede Bremse 12 ein Magnetventil 20, das durch Einstellen eines Öffnungsgrades einer nicht weiter gezeigten Eintrittsöffnung zwischen der jeweiligen Luftdruckleitung 16 in dem jeweiligen Bremszylinder 13, 14 einen Luftdruck im jeweiligen Bremszylinder 13, 14 einstellen kann.

Die Ansteuerung der einzelnen Magnetventile 20 erfolgt elektrisch. Aufgrund der Kombination der elektrisch angesteuerten Magnetventile 20 und der pneumatisch betriebenen Bremszylinder 13, 14 werden die Bremsen 12, wie bereits erwähnt, als elektropneumatisch bezeichnet.

Zur Ansteuerung wird jedes Magnetventil 20 aus einer versorgungsspannungsseitigen Steuerleitung 22 und einer referenzpotentialseitigen Steuerleitung 24 durch eine Steuervorrichtung 26 bestromt. Die Steuervorrichtung 26 kann grundlegend nach der technischen Lehre der DE 195 13 621 B4 aufgebaut sein, mit der mehrere Magnetventile 20 basierend auf einem Bremswunsch 28 über die Steuerleitungen 22, 24 gemeinsam angesteuert werden können.

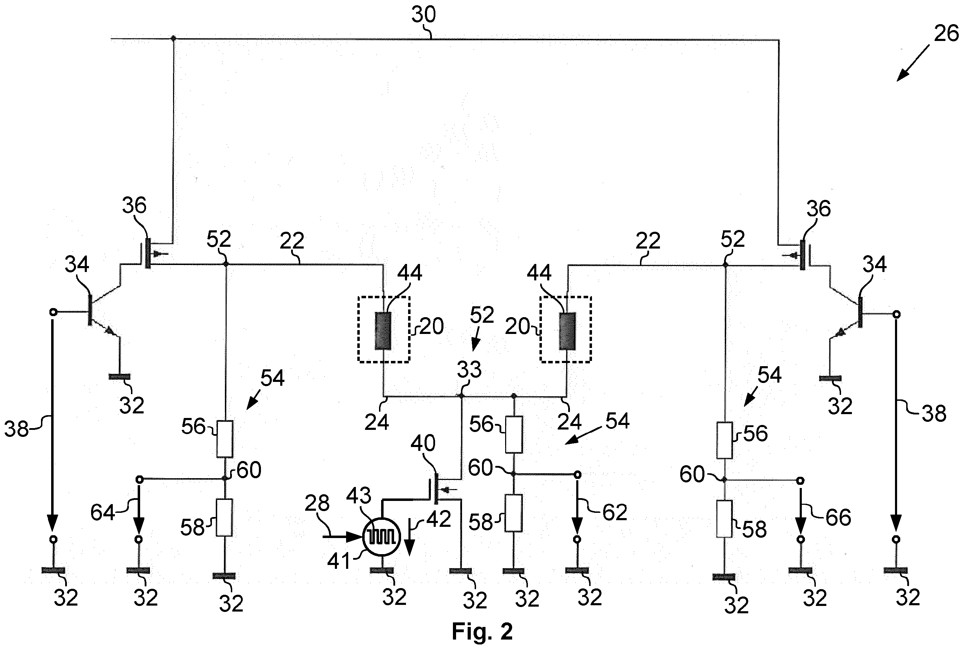

Dies soll nachstehend in einer sehr stark vereinfachten Weise anhand der Fig. 2 näher erläutert werden, die einen Teil der Steuervorrichtung 26 zeigt, die die Magnetventile 20 von zwei Bremsen 12 an einer der Achsen 8 in der Sattelzugmaschine 2 ansteuert. Für Details zum Betrieb von Betriebsbremsen und Feststellbremsen in Sattelzugmaschinen wird auf die einschlägige Literatur verwiesen.

Die beiden Magnetventile 20 sind in der Steuervorrichtung 26 über die Steuerleitungen 22, 24 T-förmig zwischen einer Versorgungsspannungsleitung 30 und einem Referenzpotential 32 in Form von Masse verschaltet, wobei der T-Punkt 33 auf der Seite des Referenzpotentials 32 gerichtet ist.

Die versorgungsspannungsseitigen Steuerleitungen 22 sind mit je einer Kaskadenschaltung aus einem bipolaren NPN-Vorverstärkertransistor 34 und einem Leistungsschalter 36 in Form eines P-Kanal MOSFETs individuell unterbrechbar. Unter der Voraussetzung, dass die referenzpotentialseitigen Steuerleitungen 24 ebenfalls leitend sind, lassen sich hierdurch die Räder 6 individuell abbremsen, um beispielsweise Fahrdynamikregelungen zu realisieren. Hierbei wird aus einem entsprechenden nicht gezeigten Fahrdynamikregler eine individuelle Steuerspannung 38 an den jeweiligen Vorverstärkertransistor 34 angelegt, die dann wiederum den jeweiligen Leistungsschalter 36 ansteuert. Auf diese Weise wird die entsprechende versorgungsspannungsseitige Steuerleitung 22 unterbrochen und die Versorgungsspannungsleitung 30 vom entsprechenden Magnetventil 20 getrennt.

Auf der Seite des Referenzpotentials 32 ist aus Sicht des Referenzpotentials 32 vor dem T-Punkt 33 ein gemeinsamer Steuerschalter 40 in Form eines N-Kanal MOSFETs angeordnet. Mit diesem gemeinsamen Steuerschalter 40 können die T-förmig verschalteten referenzpotentialseitigen Steuerleitungen 24 alle gemeinsam geschlossen werden. Unter der Voraussetzung, dass die versorgungsspannungsseitigen Steuerleitungen 22 alle geschlossen sind, können auf diese Weise die in der T-Schaltung verschalteten Magnetventile 20 gemeinsam an das Referenzpotential 32 angelegt werden.

Der gemeinsame Steuerschalter 40 wird mit einer Spannungsquelle 41 gesteuert, die an den gemeinsamen Steuerschalter 41 basierend auf dem Bremswunsch 28 eine Steuerspannung 42 in Form eines Pulsweitenmodulationssignals 43, nachstehend PWM-Signal 43 genannt, anlegt. In jedem Magnetventil 20 ist eine Steuerspule 44 vorhanden, die über die Steuerleitungen 22, 24 bestromt wird, wenn sowohl der entsprechende individuelle Leistungsschalter 36 als auch der gemeinsame Steuerschalter 40 in der zuvor genannten Weise geschalten werden. Die jeweilige Steuerspule 44 baut in an sich bekannter Weise ein Magnetfeld auf, das von der Pulsbreite des PWM-Signals 43 abhängig ist. Mit diesem Magnetfeld stellt die jeweilige Steuerspule 44 in an sich bekannter Weise den Öffnungsgrad der jeweiligen zur Bremse 12 führenden Luftdruckleitung 16 ein, um die Höhe des Bremsdruckes der Bremse 12 einzustellen.

Zwar wurde die Steuervorrichtung 26 mit sich T-förmig verzweigenden referenzpotentialseitigen Steuerleitungen 24 beschrieben, die Verzweigung kann jedoch beliebig, insbesondere beliebig sternförmig sein, so wie es beispielsweise aus der DE 10 2008 060 720 B3 bekannt ist. So könnten beispielsweise alle Bremsen 12 der beiden Hinterachsen 8 der Sattelzugmaschine 2 über einen gemeinsamen Steuerschalter 40 angesteuert werden.

Aus Sicherheitsgründen ist es notwendig, die fehlerfreie Funktion der Magnetventile 20 und der darin enthaltenen Steuerspulen 44 zu überwachen. Hierzu schlägt die WO 2001/066 397 A1 bereits vor, das Potential einer versorgungsspannungsseitigen Steuerleitung 22 zu überwachen. Auf diese Weise können Kürzschlüsse in der jeweiligen Steuerspule 44 erkannt werden, wenn das Potential auf der versorgungsspannungsseitigen Steuerleitung 22 trotz geschlossener Schalter 36, 40 gleich oder nahe dem Referenzpotential 32 ist. In einer anderen Zustandskombination der Schalter 36, 40 ist keine Fehlerüberwachung möglich. Genausowenig lässt sich eine Unterbrechung in der jeweiligen Steuerspule 44 erkennen.

Hier greift die vorliegende Ausführung mit dem Vorschlag an, entweder auf der Seite der Versorgungsspannungsleitung 30 oder auf der Seite des Referenzpotentials 32 ein Testsignal an die Schaltung anzulegen oder einzuspeisen und auf der jeweils gegenüberliegenden Seite einer der Steuerspulen 44 als Messsignal abzugreifen. Um den schaltungstechnischen Aufwand möglichst gering zu halten, wird als Testsignal auf der Seite des Referenzpotentials 32 am gemeinsamen T-Punkt die Steuerspannung 42 am gemeinsamen Steuerschalter 40 verwendet.

Das Messsignal wird über verschiedene Abgriffspunkte 52 in der Steuervorrichtung 26 an Spannungsteilern 54 gemessen, die zwischen den jeweiligen Abgriffspunkten 52 und dem Referenzpotential 32 verschaltet sind. Jeder Spannungsteiler 54 enthält einen versorgungsspannungsseitigen Widerstand 56 und einen referenzpotentialseitigen Widerstand 58, die wiederum jeweils über einen Zwischenpotentialpunkt 60 miteinander verbunden sind.

In der in Fig. 2 gezeigten Schaltung ist einer der Spannungsteiler 54 am T-Punkt 33 auf der Seite des Referenzpotentials 32 verschaltet. Der T-Punkt 33 dient daher gleichzeitig als Abgriffspunkt 52. Am Zwischenpotentialpunkt 60 dieses Spannungsteilers 54 wird ein erstes Messsignal 62 gemessen. Ein zweiter Spannungsteiler 54 ist auf der Seite der Versorgungsspannungsleitung 30 parallel zu einer der Magnetventile 20 zwischen diesem und seinem Leistungsschalter 36 verschaltet, während ein dritter Spannungsteilers 54 in entsprechender Weise parallel zum anderen der Magnetventile 20 verschaltet ist. Am Zwischenpotentialpunkt 60 dieser Spannungsteiler 54 wird entsprechend ein zweites Messsignal 64 und ein drittes Messsignal 66 gemessen.

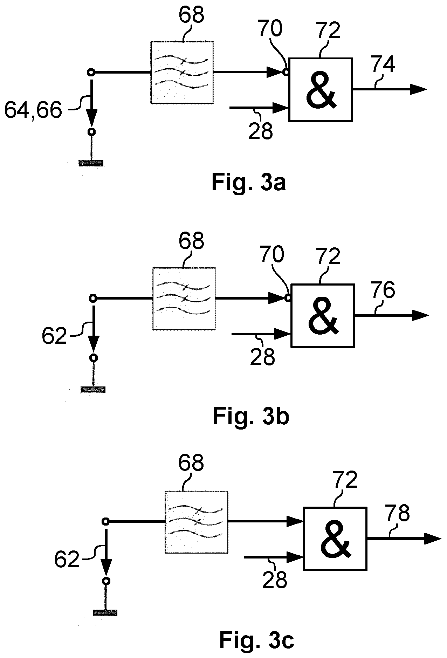

Die gemessenen Messsignale 62 bis 66 können nun zur Überwachung der Magnetventile 20 und der in ihnen enthaltenen Steuerspulen 44 in der nachstehend beschriebenen Weise ausgewertet werden. Dies soll nachstehend anhand der Fig. 3a bis 5c näher erläutert werden.

Mit dem Strukturschaltbild der Fig. 3a kann während des Betriebs einer Bremse 12, und damit während eines aktiven Bremswunsches 28, überwacht werden, ob die Magnetventile 20 auf der Seite der Versorgungsspannungsleitung 30 einen Kurzschluss zum Referenzpotential 32 aufweisen, der die Leistungsschalter 36 überbrückt.

Hierzu wird mit einem Tiefpass 68 aus dem zweiten Messsignal 64 oder dem dritten Messsignal 66 das PWM-Signal 43 herausgefiltert und einem Negationseingang 70 eines UND-Gliedes 72 zugeführt. Gleichzeitig wird an das UND-Glied 72 der Bremswunsch 28 angelegt. Wenn nun trotz eines aktiven Bremswunsches 28 das tiefpassgefilterte zweite Messsignal 64 oder das tiefpassgefilterte dritte Messsignal 66 inaktiv bleiben, heißt das, dass das Potential der entsprechenden Abgriffspunkte 52 gleich dem Referenzpotential 32 ist, obwohl aufgrund eines eigentlich fließenden Stromes ein Betriebspotential zu erwarten wäre. Daher muss der entsprechende Abgriffspunkt 52 zum Referenzpotential 32 kurzgeschlossen sein. Am UND-Glied 72 liegen in diesem Fall aufgrund des negierten und gefilterten Messsignals 64, 66 zwei positive Signale an und es wird eine entsprechende Referenzpotentialkurzschlussmeldung 74 ausgegeben.

Mit dem Strukturschaltbild der Fig. 3b kann während des Betriebs einer Bremse 12 und damit während eines aktiven Bremswunsches 28 überwacht werden, ob die Steuerspulen 44 der Magnetventile 20 eine Unterbrechung aufweisen.

Hierzu wird mit einem Tiefpass 68 aus dem ersten Messsignal 62 das PWM-Signal 43 herausgefiltert und einem Negationseingang 70 eines UND-Gliedes 72 zugeführt. Gleichzeitig wird an das UND-Glied 72 der Bremswunsch 28 angelegt. Wenn nun trotz eines aktiven Bremswunsches 28 das tiefpassgefilterte erste Messsignal 62 inaktiv bleibt, heißt das, dass das Potential des T-Punktes 33 gleich dem Referenzpotential 32 ist, obwohl aufgrund eines eigentlich fließenden Stromes über dem Spannungsteiler 54 eine Spannung abfallen müsste und daher ein anderes Potential zu erwarten wäre. Daher kann davon ausgegangen werden, dass kein Strom fließt und die Steuerspulen 44 der Magnetventile 20 eine Unterbrechung aufweisen. Am UND-Glied 72 liegen in diesem Fall aufgrund des negierten und gefilterten ersten Messsignals 62 zwei positive Signale an und es wird eine entsprechende Unterbrechnungsmeldung 76 ausgegeben. Eindeutig ist diese Unterbrechungsmeldung jedoch nicht, denn es könnte sich hierbei auch um einen Kurzschluss zwischen dem Ausgang aus einem der Magnetventile 20 auf der Seite des Referenzpotentials 32 und dem Referenzpotential 32 handeln, der den Steuerschalter 40 überbrückt. Um welchen Fehler es sich hierbei jedoch auch handelt, er ist mit dem Verfahren in der WO 2001 / 066 397 A1 nicht detektierbar.

Mit dem Strukturschaltbild der Fig. 3c kann während des Betriebs einer Bremse 12 und damit während eines aktiven Bremswunsches 28 überwacht werden, ob der Ausgang einer Steuerspule 44 der Magnetventile 20 auf der Seite des Referenzpotentials 32 einen Kurzschluss zur Versorgungsspannungsleitung 30 aufweist.

Hierzu wird mit einem Tiefpass 68 aus dem ersten Messsignal 62 das PWM-Signal 43 herausgefiltert und einem UND-Glied 72 zugeführt. Gleichzeitig wird an das UND-Glied 72 der Bremswunsch 28 angelegt. Wenn nun trotz eines aktiven Bremswunsches 28 das tiefpassgefilterte erste Messsignal 62 aktiv bleibt, heißt das, dass das Potential des T-Punktes 33 gleich dem Potential der Versorgungsspannungsleitung 30 ist, obwohl aufgrund eines eigentlich durch die Steuerspulen 44 fließenden Stromes das elektrische Potential niedriger sein müsste. Daher kann davon ausgegangen werden, dass der entsprechende Ausgang des Magnetventils 20 an die Versorgungsleitung 30 angeschlossen ist und ein entsprechender Kurzschluss vorliegt. Am UND-Glied 72 liegen in diesem Fall zwei positive Signale an und es wird eine entsprechende Versorgungsspannungskurzschlusssmeldung 78 ausgegeben. Auch dieser Fehlerfall lässt sich mit dem Verfahren in der WO 2001/066 397 A1 nicht detektieren.

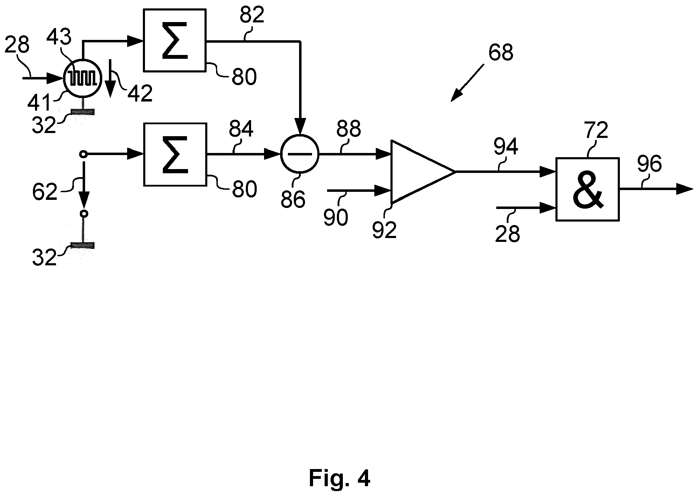

Um den Ausgang der Magnetventile 20 auf der Seite des Referenzpotentials 32 auf weitere, jedoch nicht weiter spezifizierbare Fehler hin zu überwachen, wird zusätzlich noch, wie in Fig. 4 gezeigt, das Steuersignal 42 dem ersten Messsignal 62 in der nachstehend beschriebenen Weise gegenübergestellt.

Im fehlerfreien Betrieb der Bremse 12 muss die Frequenz des Steuersignals 42 unverändert an den Spannungsteiler 54 übertragen werden, indem das erste Messsignal 62 abgegriffen wird, weil auf diesem Weg keine frequenzfilternden und/oder -dämpfenden Bauteile vorhanden sind. Deshalb wird in Akkumulatoren 80 die Frequenz 82 des Steuersignals 42 und die Frequenz 84 des ersten Messsignals 62 bestimmt. Mit einem Subtraktionsglied 86 wird dann eine Frequenzdifferenz 88 zwischen den beiden Frequenzen 82, 84 bestimmt. Wenn diese Frequenzdifferenz eine bestimmte Schranke 90 überschreitet, gibt ein Komparator 92 ein Abweichungssignal 94 aus. Mit einem UND-Glied 72 wird das Abweichungssignal 94 in ein allgemeines Fehlersignal 96 gewandelt, wenn das Abweichungssignal 94 trotz eines vorhandenen Bremswunsches auftritt, denn in diesem Fall muss die zuvor genannte Bedingung für einen fehlerfreien Betrieb der Bremse 12 erfüllt sein.

In der gleichen Weise, wie anhand Fig. 4 beschrieben, kann auch eine Steuerspule 44 eines Magnetventils 20 überwacht werden, das wegen eines geöffneten Leistungsschalters 34 inaktiv ist. In diesem Fall wird die Frequenz 82 der Steuerspannung 42 an den entsprechenden Spannungsteiler 54 übertragen, der parallel zum inaktiven Magnetventil 20, weil die Steuerspule 44 des inaktiven Magnetventils 20 zwar eine signaldämpfende aber keine frequenzverändernde Wirkung hat. Durch eine geschickte Wahl eines Verhältnisses zwischen den beiden Widerständen 56, 58 des entsprechenden Spannungsteilers 54 und der Steuerspule 44 kann die Wirkung der signaldämpfenden Steuerspule 44 hierbei gemindert werden. In einigen Tests hat sich gezeigt, dass ein Verhältnis von 1:100 zwischen dem Gesamtwiderstand der Widerstände 56, 58 des Spannungsteilers 54 und der Induktivität der entsprechenden Steuerspule 44 optimal sein kann. Dieses Verhältnis ist jedoch in jedem Fall applikationsabhängig anzupassen.

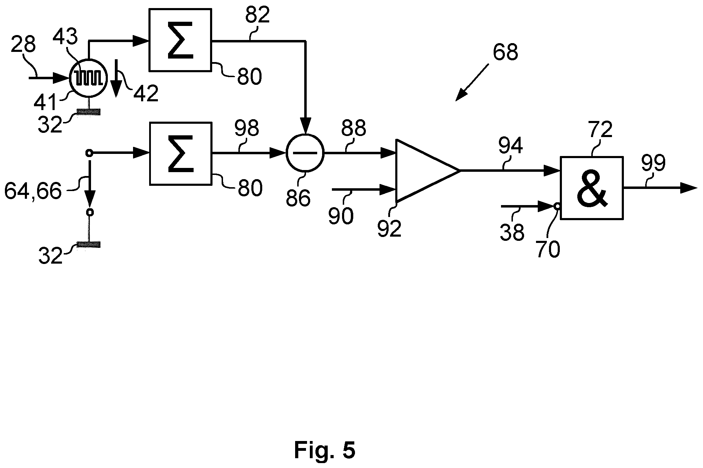

Mit dem Strukturschaltbild der Fig. 5 lässt sich der Zustand eines inaktiven Magnetventils 20 und seiner Steuerspule 44 überwachen. Es wirkt analog zu dem Strukturschaltbild der Fig. 4, wobei jedoch nicht die Frequenz 84 des ersten Messsignals 62 sondern die Frequenz 98 des zweiten Messsignals 64 oder dritten Messsignals 66 bestimmt wird, je nachdem, welches inaktive Magnetventil 20 überwacht werden soll. Wenn der Komparator 92 in Fig. 5 ein Abweichungssignal 94 ausgibt, dann gibt bei einem ausgeschalteten entsprechenden individuellen Steuersignal 38 das UND-Glied 72 ein Spulenfehlersignal 99 aus, das einen nicht weiter identifizierbaren Fehler in der Steuerspule 44 des inaktiven Magnetventils 20 anzeigt. Um diesen Fehler weiter zu konkretisieren, könnte noch analog zu den Fig. 3b und 3c das Potential am entsprechenden Abgriffspunkt 52 untersucht werden. In jedem Fall lässt sich auch der Fehlerfall der Fig. 5 nicht mit dem Verfahren in der WO 2001/066 397 A1 detektieren.

In Fig. 5 ist am UND-Glied 72 ein ausgeschaltetes individuelles Steuersignal 38 Voraussetzung, dass das Spulenfehlersignal 99 ausgeben wird. Das ist notwendig, denn im Falle eines eingeschalteten individuellen Steuersignals 38 liegt der entsprechende Abgriffspunkt 52 auf der Seite der Versorgungsspannungsleitung 30 dauerhaft auf dessen Potential und eine Frequenz kann dort trotz fehlerfreiem Betrieb und vorhandenem Steuersignal 42 am Steuerschalter 40 nicht gemessen werden.

Wenn als Testsignal statt des Steuersignals 42 ein unabhängiges Testsignal aktiv in die Schaltung der Fig. 2 eingespeist wird, dann kann auf die Bedingung, dass das individuelle Steuersignal 38 inaktiv sein muss, auch verzichtet werden.

### Bezugszeichenliste

- 1 2: Sattelzugmaschine
- 3 4: Chassis
- 6: Rad
- 8: Vorder- und Hinterachsen
- 10: Bremssystem

- 12: Bremse
- 13: Bremszylinder
- 14: Kombibremszylinder
- 16: Luftdruckleitungen oder Luftdruckquelle??
- 18: Luftdruckquelle
- 20: Magnetventile
- 22: Steuerleitung
- 24: Steuerleitung
- 26: Steuervorrichtung
- 28: Bremswunsch
- 30: Versorgungsspannungsleitung
- 32: Referenzpotential
- 33: T-Punkt
- 34: Vorverstärkertransistor
- 36: Leistungsschalter
- 38: Steuerspannung
- 40: Steuerschalter
- 41: Spannungsquelle
- 42: Testsignal
- 43: Pulsweitenmodulationssignal
- 44: Steuerspule
- 52: Abgriffspunkte
- 54: Spannungsteiler
- 56: versorgungsspannungsseitigen Widerstand
- 58: referenzpotentialseitigen Widerstand
- 60: Zwischenpotentialpunkt
- 62: erstes Messsignal
- 64: zweites Messsignal
- 66: drittes Messsignal
- 68: Tiefpass
- 70: Negationseingang
- 72: UND-Glied
- 74: Referenzpotentialkurzschlussmeldung
- 76: Unterbrechungsmeldung
- 78: Versorgungsspannungskurzschlussmeldung
- 80: Akkumulation
- 82: Frequenz
- 84: Frequenz
- 86: Subtraktionsglied
- 88: Frequenzdifferenz
- 90: Schranke
- 92: Komparator
- 94: Abweichungssignal
- 96: Fehlersignal
- 99: Spulenfehlersignal

## Patentansprüche

1. Verfahren zum Überwachen eines Magnetventils (20) mit einer Steuerspule (44) zum Steuern eines Luftdruckes in einem Bremszylinder (13, 14) einer elektropneumatischen Bremse (12), wobei das Magnetventil (20) eine Versorgungsspannungsseite (30), an der die Steuerspule (44) einen elektrischen Versorgungsstrom aufnimmt, und eine Referenzpotentialseite (32), an der die Steuerspule den elektrischen Versorgungsstrom abgibt, aufweist, umfassend:
- Anlegen eines Testsignals (42) auf einer Seite (30, 32) des Magnetventils (20);
- Abgreifen eines Messsignals (62 bis 64) auf der anderen Seite (32, 30) des Magnetventils (20), und
- Bestimmen des Zustandes (96, 99) des Magnetventils (20) basierend auf einer Gegenüberstellung (80) des Testsignals (42) und des Messsignals (62 bis 66) **dadurch gekennzeichnet, dass** das Testsignal (62) von der Steuerung des Luftdrucks im Bremszylinder (13, 14) abhängig ist.

2. Verfahren nach Anspruch 1, wobei das Testsignal (42) einen vorbestimmten, sich zeitlich ändernden Verlauf (43) aufweist.

3. Verfahren nach Anspruch 2, wobei der zeitliche Verlauf (43) aus einer Vielzahl von Pulsen gebildet ist.

4. Verfahren nach Anspruch 3, umfassend Zählen (80) von Pulsen im Messsignal (62 bis 66) über eine vorbestimmte Zeitdauer, wobei die Gegenüberstellung (80) einen Vergleich der gezählten Pulse (84, 96) im Messsignal (62 bis 66) mit einem Zählwert umfasst, der einer Anzahl von Pulsen (82) im Testsignal (42) während der vorbestimmten Zeitdauer entspricht.

5. Verfahren nach einem der vorstehenden Ansprüche, wobei die Steuerspule (44) parallel zu einem versorgungsseitigen (30) Spannungsteiler (54) geschaltet ist und das Messsignal (62 bis 66) an einem Zwischenpotentialpunkt (60) des versorgungsseitigen (30) Spannungsteilers (54) abgegriffen wird.

6. Verfahren nach einem der vorstehenden Ansprüche, wobei die Steuerspule (44) in Reihe zu einem referenzpotentialseitigen (32) Spannungsteiler (54) geschaltet ist und das Testsignal (42) an einen Zwischenpotentialpunkt (60) des referenzpotentialseitigen (32) Spannungsteilers (54) angelegt wird.

7. Verfahren nach Anspruch 5 oder 6, wobei ein Verhältnis zwischen dem Gesamtwiderstand des Spannungsteiler (54) und der Induktivität der Steuerspule (44) zwischen 1:50 und 1:200, insbesondere zwischen 1:75 und 1:150, besonders bevorzugt bei 1:100 liegt.

8. Verfahren nach einem der vorstehenden Ansprüche, umfassend ein weiteres Magnetventil (20) mit einer weiteren Steuerspule (44), wobei die beiden Magentventile (20, 20) in Reihe geschaltet sind und das Testsignal (42) an einem Zwischenpotentialpunkt (33) zwischen den beiden Magnetventilen (20, 20) angelegt wird.

9. Verfahren nach Anspruch 8, umfassend:
- Abgreifen eines weiteren Messsignals (64, 66) auf der dem Zwischenpotentialpunkt (33) gegenüberliegenden Seite (30) des weiteren Magnetventils (20), und
- Bestimmen des Zustandes (99) des weiteren Magnetventils (20) basierend auf einer Gegenüberstellung (80) des Testsignals (42) und des weiteren Messsignals (64, 66).

10. Steuervorrichtung (56), die eingerichtet ist, ein Verfahren nach einem der vorstehenden Ansprüche durchzuführen.

11. Elektropneumatische Bremse (12), umfassend:
- einen mit Luftdruck befüllbaren Bremszylinder (13, 14) zum Ansteuern eines Bremsaktuators,
- eine Luftdruckquelle (16) zum Befüllen des Bremszylinders (13, 14),
- ein Magnetventil (20) zum gesteuerten Anlegen eines Luftdrucks aus der Luftdruckquelle (16) an den Bremszylinder (13, 14), und
- eine Steuervorrichtung (56) nach Anspruch 10 zum Überwachen des Zustandes (96, 99) des Magnetventils (20).

12. Computerprogramm umfassend Programmcodemittel, um alle Schritte eines Verfahrens nach einem der Ansprüche 1 bis 9 durchzuführen, wenn das Computerprogramm auf einem Computer einer Steuervorrichtung nach Anspruch 10 ausgeführt wird.

## Claims

1. Method for monitoring a solenoid valve (20) having a control coil (44) for controlling an air pressure in a brake cylinder (13, 14) of an electropneumatic brake (12), wherein the solenoid valve (20) has a supply voltage side (30), at which the control coil (44) takes up an electric supply current, and a reference potential side (32), at which the control coil delivers the electric supply current, said method comprising:
- applying a test signal (42) on one side (30, 32) of the solenoid valve (20);
- tapping a measurement signal (62 to 64) on the other side (32, 30) of the solenoid valve (20), and
- determining the state (96, 99) of the solenoid valve (20) based on a juxtaposition (80) of the test signal (42) and of the measurement signal (62 to 66), **characterized in that** the test signal (62) is dependent on the control of the air pressure in the brake cylinder (13, 14).

2. Method according to Claim 1, wherein the test signal (42) has a predetermined, temporally changing profile (43).

3. Method according to Claim 2, wherein the temporal profile (43) is formed from a plurality of pulses.

4. Method according to Claim 3, comprising counts (80) of pulses in the measurement signal (62 to 66) over a predetermined period, wherein the juxtaposition (80) comprises a comparison of the counted pulses (84, 96) in the measurement signal (62 to 66) with a count value, which corresponds to a number of pulses (82) in the test signal (42) over the predetermined period.

5. Method according to one of the preceding claims, wherein the control coil (44) is connected in parallel with a supply-side (30) voltage divider (54) and the measurement signal (62 to 66) is tapped at an intermediate potential point (60) of the supply-side (30) voltage divider (54).

6. Method according to one of the preceding claims, wherein the control coil (44) is connected in series with a reference-potential-side (32) voltage divider (54) and the test signal (42) is applied at an intermediate potential point (60) of the reference-potential-side (32) voltage divider (54).

7. Method according to Claim 5 or 6, wherein a ratio between the total resistance of the voltage divider (54) and the inductance of the control coil (44) is between 1:50 and 1:200, in particular between 1:75 and 1:150, particularly preferably is 1:100.

8. Method according to one of the preceding claims, comprising a further solenoid valve (20) having a further control coil (44), wherein the two solenoid valves (20, 20) are connected in series and the test signal (42) is applied at an intermediate potential point (33) between the two solenoid valves (20, 20).

9. Method according to Claim 8, comprising:
- tapping a further measurement signal (64, 66) on the side (30) of the further solenoid valve (20) opposite the intermediate potential point (33), and
- determining the state (99) of the further solenoid valve (20) based on a juxtaposition (80) of the test signal (42) and of the further measurement signal (64, 66).

10. Control apparatus (56), which is configured to carry out a method according to one of the preceding claims.

11. Electropneumatic brake (12), comprising:
- a brake cylinder (13, 14) that can be filled with compressed air for actuating a brake actuator,
- a compressed air source (16) for filling the brake cylinder (13, 14),
- a solenoid valve (20) for targeted application of compressed air from the compressed air source (16) to the brake cylinder (13, 14), and
- a control apparatus (56) according to Claim 10 for monitoring the state (96, 99) of the solenoid valve (20) .

12. Computer program comprising program code means in order to carry out all the steps of a method according to one of Claims 1 to 9 when the computer program is executed on a computer of a control apparatus according to Claim 10.

## Revendications

1. Procédé de contrôle d'une électrovanne (20) comprenant une bobine (44) de commande pour la commande de la pression de l'air dans un cylindre (13, 14) de frein d'un frein (12) électropneumatique, dans lequel l'électrovanne (20) a un côté (30) de tension d'alimentation, où la bobine (44) de commande reçoit un courant électrique d'alimentation, et un côté (32) de potentiel de référence où la bobine de commande cède le courant électrique d'alimentation, comprenant :
- l'application d'un signal (42) de test à un côté (30, 32) de l'électrovanne (20) ;
- le prélèvement d'un signal (62 à 64) de mesure de l'autre côté (32, 30) de l'électrovanne (20), et
- la détermination de l'état (96, 99) de l'électrovanne (20) sur la base de la confrontation (80) du signal (42) et du signal (62 à 66) de mesure, **caractérisé en ce que** le signal (62) de test dépend de la commande de la pression de l'air dans le cylindre (13, 14) de frein.

2. Procédé suivant la revendication 1, dans lequel le signal (42) de test a une courbe (43), définie à l'avance, qui varie en fonction du temps.

3. Procédé suivant la revendication 2, dans lequel la courbe (43) en fonction du temps est formée d'une pluralité d'impulsions.

4. Procédé suivant la revendication 3, comprenant compter (80) des impulsions dans le signal (62 à 66) de mesure pendant une durée définie à l'avance, la confrontation (80) comprenant une comparaison des impulsions (84, 96) comptées dans le signal (62 à 66) de mesure à une valeur de compte, qui correspond à un nombre d'impulsions (82) dans le signal (42) de test pendant la durée définie à l'avance.

5. Procédé suivant l'une des revendications précédentes, dans lequel la bobine (44) de commande est montée en parallèle à un diviseur (54) de tension du côté (30) de l'alimentation et on prélève le signal (62 à 66) de mesure en un point (60) de potentiel intermédiaire du diviseur (54) de tension du côté (30) de l'alimentation.

6. Procédé suivant l'une des revendications précédentes, dans lequel la bobine (44) de commande est montée en série avec un diviseur (54) de tension du côté (32) du potentiel de référence, et on applique le signal (42) de test à un point (60) de potentiel intermédiaire du diviseur (54) de tension du côté (32) du potentiel de référence.

7. Procédé suivant la revendication 5 ou 6, dans lequel un rapport, entre la résistance d'ensemble du diviseur (54) de tension et l'inductance de la bobine (44) de commande, est compris entre 1:50 et 1:200, notamment entre 1:75 et 1:150, en étant d'une manière particulièrement préférée de 1:100.

8. Procédé suivant l'une des revendications précédentes, comprenant une autre électrovanne (20), comprenant une autre bobine (44) de commande, dans lequel les deux électrovannes (20, 20) sont montées en série, et on applique le signal (42) de test à un point (33) de potentiel intermédiaire entre les deux électrovannes (20, 20).

9. Procédé suivant la revendication 8, comprenant :
- le prélèvement d'un autre signal (64, 66) de mesure du côté (30), opposé au point (33) de potentiel intermédiaire, de l'autre électrovanne (20), et
- la détermination de l'état (99) de l'autre électrovanne (20) sur la base d'une confrontation (80) entre le signal (42) de test et l'autre signal (64, 66) de mesure.

10. Dispositif (56) de commande, qui est conçu pour effectuer un procédé suivant l'une des revendications précédentes.

11. Frein (12) électropneumatique, comprenant :
- un cylindre (13, 14) de frein pouvant être rempli par une pression d'air pour commander un actionneur de frein,
- une source (16) d'air comprimé pour remplir le cylindre (13, 14) de frein,
- une électrovanne (20) pour appliquer, de manière commandée, une pression d'air de la source (16) de pression d'air au cylindre (13, 14) de frein, et
- un dispositif (56) de commande suivant la revendication 10, pour le contrôle de l'état (96, 99) de l'électrovanne (20).

12. Programme d'ordinateur, comprenant des moyens de code de programme, pour effectuer tous les stades d'un procédé suivant l'une des revendications 1 à 9, lorsque le programme d'ordinateur est réalisé sur un ordinateur d'un dispositif de commande suivant la revendication 10.
